# EUROPEAN PATENT APPLICATION

(11) **EP 1 245 256 A1**
(43) Date of publication of application: **02.10.2002**
(21) Application number: 02076244.9
(22) Date of filing: 27.03.2002
(51) Int. Cl.: A63G 27/04, B60R 21/02

(54) **Fairground attraction**

(30) Priority: 28.03.2001 NL 1017725
(71) Applicant: Cobra Beheer B.V., 7161 AE Neede (NL)
(72) Inventor: Kroon, Louisito Johannes Eusebio, 7161 AE Neede (NL); Kroon, Albert Louisito Phillips, 7161 AE Neede (NL)
(74) Representative: Jorritsma, Ruurd

(57) **Abstract**

An installation for moving a person along a path such that the body of said person is subjected to certain speeds and/or accelerations comprises a frame, at least one arm movably joined to said frame, drive means for driving the arm, as well as at least one accommodating means that is constructed to hold a person securely in place. The accommodating means comprise a saddle-shaped part on which the person can sit astride.

## Description

The invention relates to an installation for moving a person along a path such that the body of said person is subjected to certain speeds and/or accelerations, which installation comprises a frame, at least one arm movably joined to said frame, drive means for driving the arm, as well as at least one accommodating means that is constructed to hold a person securely in place.

An installation of this type is known and is used, for example, as an attraction in fairgrounds and in amusement parks. The people who have occupied a seat in the attraction experience a sensation during the various movements and accelerations to which they are subjected. These movements depend, inter alia, on the kinematic characteristics of the installations which, for example, have multiple arms, hinge points and points of rotation, and the like. The movement pattern obtained as a result is usually characterised by many bends following on from one another, which yields accelerations which lead to a specific experience. In the case of the known installation the people are seated on a bench or seat, the thighs being supported approximately horizontally.

The aim of the invention is to provide an installation that adds an extra dimension to the experience to which the person is subjected during the movements of the installation. Said aim is achieved in that the accommodating means comprise a saddle-shaped part on which the person can sit astride.

As a consequence of the fact that the person is sitting astride a saddle, his or her legs swing freely in space. The secure or safe feeling that a platform or a footboard offers is consequently no longer present, as a result of which the person has a greater feeling that he or she is being moved freely through space than has been the case up to now. The sensation of floating freely is experienced very clearly, as a result of which the attractiveness of the installation is greater.

The saddle-shaped part comprises a central support alongside which the legs of a person on the saddle-shaped part extend. Furthermore, the saddle-shaped part can have a seat, with respect to which the central support extends.

In connection with safety, an enclosing arm can extend on either side of the central support, in such a way that one of a person's legs is always between the central support and an enclosing arm.

In order to obtain good support of the person with regard to the various accelerations to which the latter is subjected, a backrest that adjoins the saddle-shaped part can be provided. The backrest can also be extended by a headrest.

The person can be restrained in the installation by a restraint that can hinge about a hinge pin that is located some distance away from the saddle-shaped part and is at or above the level of the shoulders of a person who occupies the saddle-shaped part. The hinge pin is preferably at the level of the headrest. As a result the restraint can be swung upwards to such an extent that the person is easily able to take up position on the saddle.

Furthermore, locking means are provided for locking the restraint in the restraining position with respect to the saddle-shaped part. Said locking means are actuated as soon as the person has taken up position. Only at the end of the ride are the locking means released such that the restraint can be swung upwards and the person can leave the installation.

Furthermore, a safety harness can be provided which extends over the shoulders of the person when the restraint is swung down. By means of such a safety harness any person, irrespective of his or her body size, can be safely restrained in the restraint.

The invention will be explained in more detail below with reference to an illustrative embodiment of the installation according to the invention shown in the figures.

Fig. 1 shows a perspective view of the installation.

Fig. 2 shows a perspective view of the complete accommodating means according to the invention.

Fig. 3 shows a perspective view of the accommodating means without covering, with the restraint open.

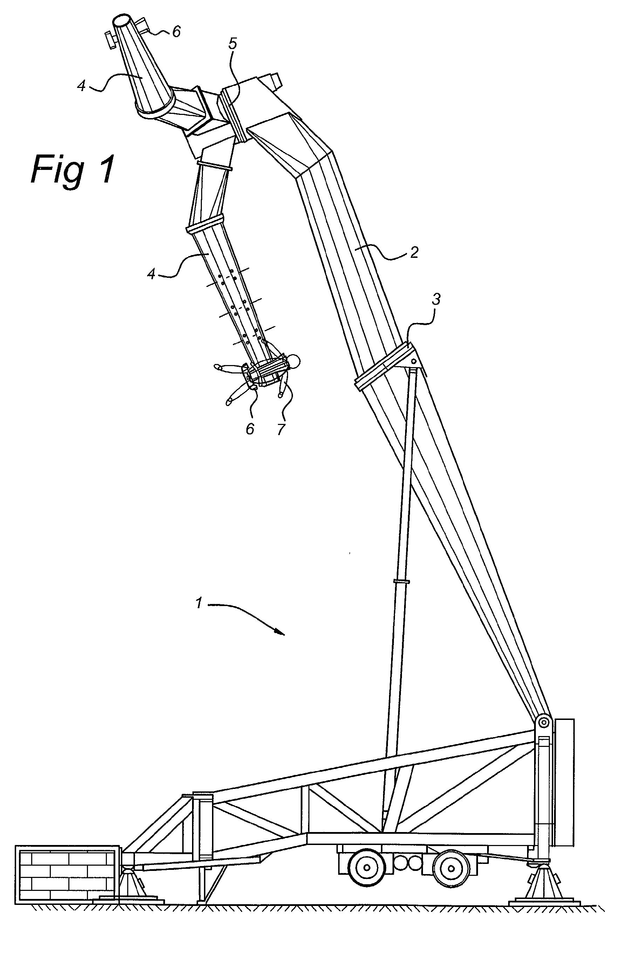

The installation, such as a fairground attraction, shown in Fig. 1 comprises a frame 1 on which a supporting arm 2 is located. Said supporting arm 2 is able to rotate above the frame 1 by means of the live ring 3.

Three arms 4, two of which can be seen, are mounted at the end of the supporting arm 2. Said arms 4 can be rotated with respect to the supporting arm 2 by means of the live ring 5. The supporting arm 2 and the arms 4 can be moved by means of hydraulic or electrical drives, which are known per se and are not shown in more detail.

In the illustrative embodiment shown, four sets of accommodating means 6, on which a person 7 can be present, are mounted on each of the arms 4.

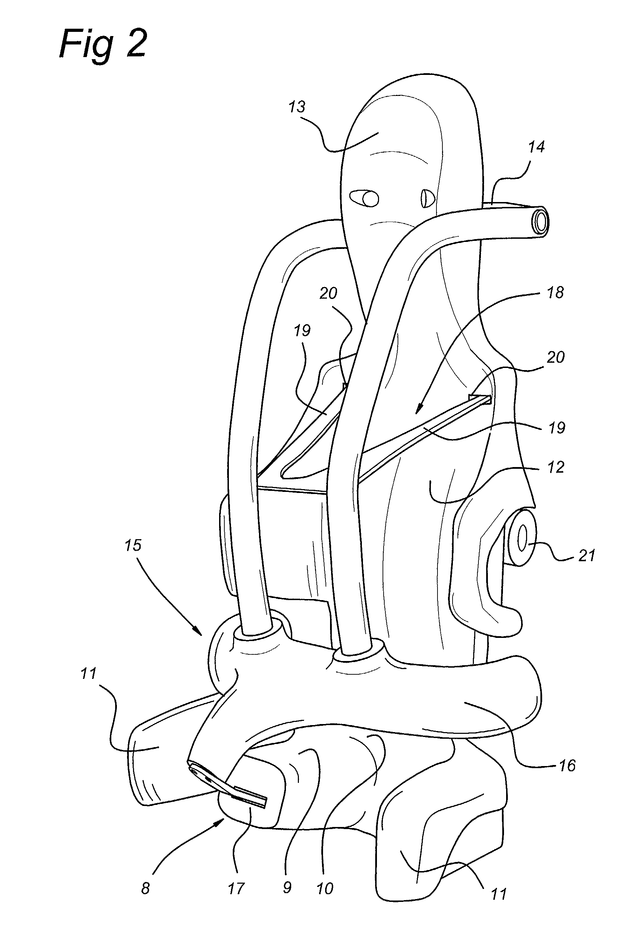

The accommodating means 6 are shown in more detail in Fig. 2. These accommodating means comprise a saddle-shaped part 8, on which, as is shown in Fig. 1, the person 7 is able to sit astride. This means that the person's legs hang freely downwards alongside the central support 9 of the saddle-shaped part 8. The saddle-shaped part 8 furthermore comprises a seat 10, with respect to which the central support extends. In connection with safety, enclosing arms 11 are provided on either side of the central support 9. Therefore, each of the person's legs extends freely and straight downwards between one of the enclosing arms 11 and the central support 9.

Furthermore, the accommodating means comprise a backrest 12, at the bottom of which the saddle-shaped part 8 is arranged. The backrest 12 is extended at the top by a headrest 13, which supports a hinge pin 14 for the restraint indicated in its entirety by 15. This restraint has a front support 16, which is at the level of the middle of the person.

Locking means 17 are also provided, by means of which the restraint 15 can be locked with respect to the central support 9.

In order to be able properly to restrain persons of different size, a safety harness 18 is fitted. This safety harness comprises two belts 19, which at one end are connected to the restraint 15 and at the other end are guided via an eye 20 in the backrest to a reel mechanism 21.

When the restraint 15 is closed the belts 19 come to bear on the person's shoulders. During this operation the reel mechanism 21 plays out as far as is necessary, depending on the size of the person. Since this reel mechanism is also provided with locking to prevent rapid or sudden playing out, the person can thus be safely restrained.

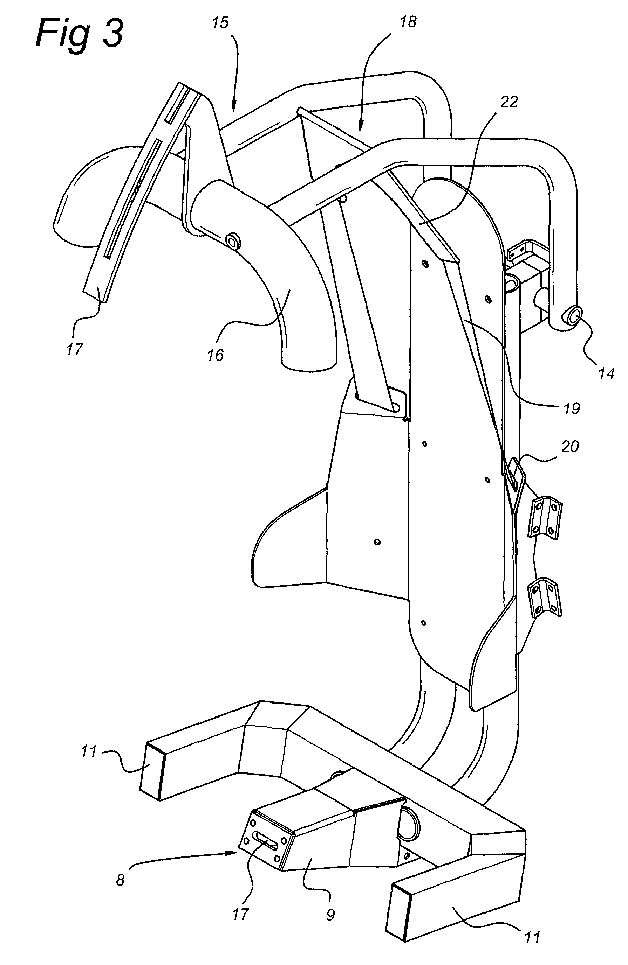

In Fig. 3 the accommodating means are shown without covering, that is to say only the metal frame can be seen in Fig. 3.

It can also be seen that the belts 19 are moved upwards with the restraint 15. As a result it is easy for the person to sit down. As soon as the restraint 15 is lowered and the locking 17 comes into operation the person is well secured by the belts 19.

The belts 19 also have a support section 22, which ensures that even people of smaller stature can be secured.

## Claims

1. Installation for moving a person along a path such that the body of said person is subjected to certain speeds and/or accelerations, comprising a frame (1), at least one arm (2, 4) movably joined to said frame, drive means for driving the arm (2, 4), as well as at least one accommodating means (6) that is constructed to hold a person securely in place, **characterised in that** the accommodating means (6) comprise a saddle-shaped part (8) on which the person can sit astride.

2. Installation according to Claim 1, wherein the saddle-shaped part (8) comprises a central support (9) alongside which the legs of a person on the saddle-shaped part extend freely.

3. Installation according to Claim 2, wherein the saddle-shaped part (8) comprises a seat (10), with respect to which the central support (9) extends.

4. Installation according to Claim 2 or 3, wherein an enclosing arm (11) extends on either side of the central support (9), in such a way that one of a person's legs can always extend between the central support (9) and an enclosing arm (11).

5. Installation according to one of the preceding claims, wherein a backrest (12) that adjoins the saddle-shaped part (8) is provided.

6. Installation according to Claim 5, wherein the backrest (12) is extended by a headrest (13).

7. Installation according to Claim 5 or 6 in combination with Claim 3, wherein the seat (10) is at the bottom of the backrest (12) and the central support (9) is at that end of the seat (10) that faces away from the backrest (12).

8. Installation according to Claim 5, 6 or 7 in combination with Claim 4, wherein the enclosing arms (11) are at the bottom end of the backrest (12).

9. Installation according to one of the preceding claims, wherein a restraint (15) is provided for restraining a person, which restraint can hinge about a hinge pin (14) that is located some distance away from the saddle-shaped part and is at or above the level of the shoulders of a person who occupies the saddle-shaped part (8).

10. Installation according to Claim 6 and 9, wherein the hinge pin (14) is at the height of the headrest (13).

11. Installation according to Claim 9 or 10, wherein locking means (17) are provided for locking the restraint (15) in the restraining position with respect to the saddle-shaped part (8).

12. Installation according to one of Claims 9 - 11, wherein a safety harness (18) is provided which extends over the shoulders of the person when the restraint (15) is swung down.

13. Installation according to Claim 12, wherein the safety harness (18) comprises at least two belts (19) made of flexible material, which belts are connected at one end to the restraint (15) and at the other end to the backrest (12).

14. Installation according to Claim 13, wherein each belt (19) is connected at one end to a reel mechanism (21) for keeping the belt (19) taut under pretension.

15. Installation according to Claim 14, wherein the reel mechanism (21) has locking to prevent rapid or sudden playing out.

16. Installation according to one of the preceding claims, wherein at least one further arm (4) is provided that is mounted by means of a rotary joint, such as a live ring (5), on the arm (2) connected to the frame (1).

17. Installation according to Claim 16, wherein two or more arms (4) which are regularly distributed in the direction of rotation are mounted on the rotary joint (5).

18. Accommodating means (6) for an installation according to one of the preceding claims, which accommodating means (6) comprise a saddle-shaped part (8) on which the person is able to sit astride, in such a way that the person's legs extend freely alongside said saddle-shaped part (8).
